# DEMANDE DE BREVET EUROPEEN

(11) **EP 2 061 017 A1**
(43) Date de publication de la demande: **20.05.2009**
(21) Numéro de dépôt: 08168580.2
(22) Date de dépôt: 07.11.2008
(51) Int. Cl.: G09B 29/10, G01C 21/34, G06Q 10/00

(54) **Système et procédé de fourniture d'informations d'orientation**

(30) Priorité: 12.11.2007 FR 0758959
(71) Demandeur: Alcatel Lucent, 75008 Paris (FR)
(72) Inventeur: Hedarchet, Stéphane, 75008 Paris (FR)
(74) Mandataire: Hedarchet, Stéphane

(57) **Abrégé**

Dispositif de fourniture d'informations d'orientation pour un consommateur (2) à la recherche d'un article (article i) dans un centre commerçant, comprenant :
- des moyens de sélection (3, 4, 5) par le consommateur d'au moins ledit article parmi une liste d'articles proposés à la vente au sein du centre commerçant,
- des premiers moyens de mémorisation (10) pour mémoriser une table de correspondance entre des paires de points de localisation et des portions de trajet imposées,
- des moyens de calcul (8) d'au moins un trajet (Δh, Δh') consistant en un chemin partant du point de localisation (x1) dudit terminal Lors de la sélection vers le point de localisation (x6) de l'article sélectionné comprenant les portions de trajet imposées. Procédé associé.

## Description

La présente invention est relative à un système et un procédé de fourniture d'informations d'orientation pour des consommateurs dans un centre commerçant. Elle présente un "intérêt particulier pour une utilisation à destination de consommateurs se situant dans des centres commerciaux, des hypermarchés, ou tout autre endroit commerçant s'étalant sur une relative grande superficie. Pour une commodité de langage, il sera utilisé le terme de "grand magasin" dans la suite de la description, sans que ce soit limitatif.

Il est courant de se retrouver dans un grand magasin où la difficulté réside dans la recherche de la localisation d'un article souhaité. Dans d'autres cas, bien que connaissant le type ou le domaine d'articles que l'on souhaite acheter, la difficulté peut également résider dans la recherche d'un article particulier correspondant a son propre goût. C'est par exemple le cas lorsqu'on pénètre un magasin de vêtements à la recherche d'un pantalon sans avoir d'opinion a priori sur le type de pantalon, son genre, sa couleur et d'autres caractértstiques.

Il existe de nos jours des panneaux, généralement placés à l'entrée des grands magasins, qui fournissent la localisation approximative de catégories d'articles. Ainsi, un panneau peut spécifier : alimentaire : sous-sol ; vêtements féminins ; rez-de-chaussée ; vêtements masculins : 1^{er} étage ; accessoires de loisirs : 2^{ème} étage, etc.

Cependant, une telle indication n'est pas suffisamment précise si l'on recherche un article précis. Elle nécessite en outre une analyse de la part du consommateur sur le chemin à adopter pour déceler l'endroit exact où est positionné l'article recherché.

Par ailleurs, si tant est qu'une indication plus précise soit fournie, elle risquerait d'inciter le consommateur à parcourir le chemin vers le point de l'article souhaité "en ligne droite", c'est à dire en essayant de prendre le chemin le plus court, Cette démarche nécessite également une analyse de la part du consommateur sur le chemin à adopter pour aboutir à l'endroit indiqué.

L'invention se donne pour objectif de fournir au consommateur un dispositif et un procédé d'assistance à la navigation dans un centre commerçant qui résolve Les inconvénients cités ci-dessus.

A cet effet, l'invention a pour objet un procédé de fourniture d'informations d'orientation pour un consommateur à la recherche d'un article dans un centre commerçant, comprenant :
- une étape de sélection par le consommateur d'au moins ledit article parmi une liste d'articles proposés par un terminal,
- une première étape de mémorisation pour mémoriser une table de correspondance entre des paires de points de localisation et des portions de trajet imposées,
- une étape de calcul d'au moins un trajet résultant consistant en un chemin partant du point de localisation dudit terminal lors de la sélection vers le point de localisation de l'article sélectionné, le trajet résultant comprenant au moins une portion de trajet imposée correspondant à la paire de point de localisation {point de localisation dudit terminal lors de la sélection-point de localisation de l'article sélectionné}.

De la sorte, l'invention objet de la présente demande permet de fournir un trajet optimisé pour le consommateur tout en prenant en compte les principes impératifs du marchandisage (traduction française du "merchandising").

En effet, l'invention permet notamment d'éviter la constitution de zones froides à l'intérieur du centre commerçant, c'est-à-dîre de rayons (ou groupe de rayons) rarement ou jamais visités par les consommateurs, habitués à un parcours identique d'une visite à l'autre. Le merchandising a un rôle très important depuis l'essor de la vente en libre-service, dès lors que le produit est seul à se vendre sur le linéaire.

Selon un mode de réalisation, les portions de trajet dans la table de correspondance entre des paires de points de localisation et des portions de trajet imposées, sont dynamiquement modifiées.

Selon un mode de réalisation, le procédé comporte une étape de récupération d'un identifiant de consommateur, une seconde étape de mémorisation pour mémoriser une table de correspondance entre des identifiants de consommateurs et leurs caractéristiques respectives de profil, et une troisième étape de mémorisation pour mémoriser une table de correspondance entre des caractéristiques de profil et une pluralité de trajets associés, l'étape de calcul du trajet résultant étant destinée à sélectionner un trajet comprenant lesdites portions de trajet. Ainsi, l'invention objet de la présente demande peut instaurer, dans l'intérêt du consommateur, "un parcours client" qui lui est personnalisé, ce qui en même temps le rend plus propice à consommer.

Selon un mode de réalisation, le trajet résultant de l'étape de calcul est acheminé vers un écran d'un dispositif fixe de fourniture d'informations d'orientation.

L'invention a également pour objet un dispositif de fourniture d'informations d'orientation pour un consommateur à la recherche d'un article dans un centre commerçant, comprenant :
- des moyens de sélection par le consommateur d'au moins ledit article parmi une liste d'articles proposés à la vente au sein du centre commerçant,
- des premiers moyens de mémorisation pour mémoriser une table de correspondance entre des paires de points de localisation et des portions de trajet imposées,
- des moyens de calcul d'au moins un trajet consistant en un chemin partant du point de localisation dudit terminal lors de la sélection vers le point de localisation de l'article sélectionné comprenant les portions de trajet imposées.

Selon un mode de réalisation, le dispositif selon l'invention comporte des moyens de récupération d'un identifiant dudit consommateur à la recherche dudit article, des seconds moyens de mémorisation pour mémoriser une table de correspondance entre des identifiants de consommateurs et leurs caractéristiques respectives de profil, et des troisièmes moyens de mémorisation comportant une table de correspondance entre des caractéristiques de profil et une pluralité de trajets associés.

Selon un mode de réalisation, le dispositif selon l'invention est intégré a une borne fixe d'orientation de consommateurs.

D'autres caractéristiques et avantages de l'invention apparaîtront à l'examen de la description détaillée ci-après, et des dessins annexés qui pourront non seulement servir à compléter l'invention, mais aussi contribuer à sa définition, le cas échéant :

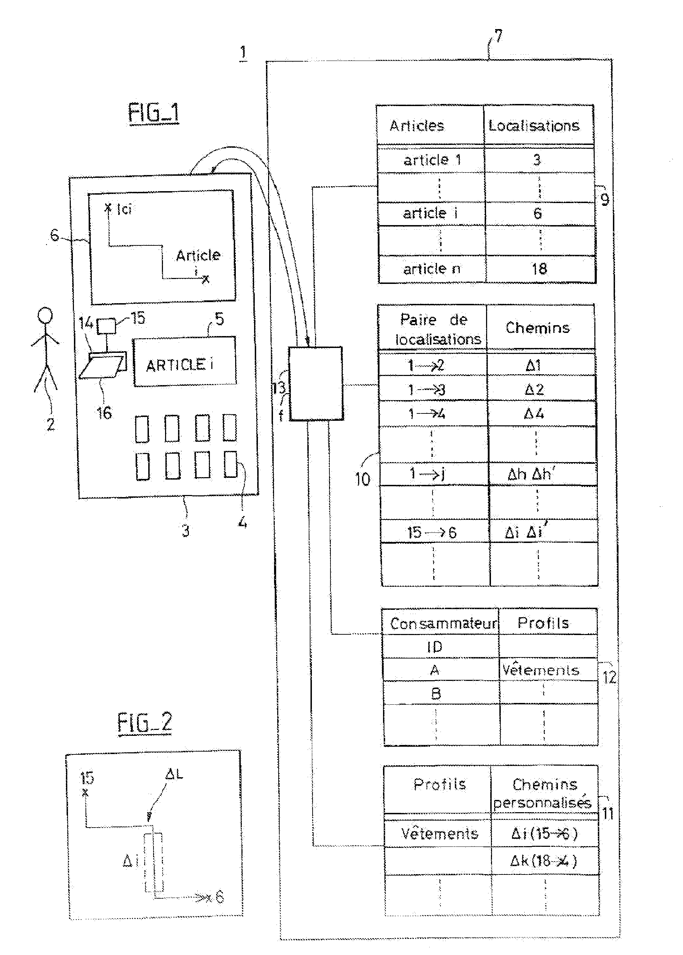

- La figure 1 illustre de façon très schématique un système selon un mode de réalisation de l'invention,

Il est illustré sur la figure 1 un système 1 selon un mode de réalisation de l'invention.

Un consommateur 2 pénètre l'enceinte d'un grand magasin et trouve à proximité de l'entrée une borne 3 destinée à proposer un chemin optimisé pour le consommateur à la recherche d'un article. Cette borne comporte des touches de sélection 4 permettant de sélectionner un article parmi une liste d'articles prédéfinis. De préférence, la liste d'articles prédéfinis comprend tous les articles proposés et disponibles dans le grand magasin pour la vente immédiate. L'article sélectionné "article i" par le consommateur s'affiche sur un afficheur 5. Un écran 6 de la borne est destiné à afficher te chemin demandé.

De façon préférentielle, la borne 3 est pourvue d'un lecteur 14 de cartes de fidélité 16 (cartes apparentées au centre commerçant) de consommateur. Alternativement, tout autre moyen de récupération de l'identifiant du consommateur et/ou des caractéristiques de profil du consommateur peuvent être envisagées : ainsi peut-on envisager que la carte de fidélité soit pourvue d'une puce RFID ou NFC, ou que ce soit le téléphone portable du consommateur qui permette, par des techniques d'accès WLAN (par exemple WIFI), de récupérer cet identifiant,

La requête d'orientation est transmise vers un serveur 7 de calcul de chemins optimisés. La transmission de la requête peut être réalisée de toute manière connue, par voie filaire ou sans fil, utilisant tout type de protocole adéquat bien connu de l'Homme du Métier pour le transport de ce type de requête de service.

Cette requête d'orientation est reçue, via un port d'entrée 13 du serveur 7, par une unité de traitement de données 8.

Par ailleurs, le serveur comporte une première mémoire 9 mettant en relation la liste des articles du grand magasin avec respectivement leur point de localisation précis. Alternativement, cette première mémoire peut faire correspondre chaque article avec respectivement un lien ou un pointeur d'adresses correspondant au point de localisation correspondant aux articles. Schématiquement, il est illustré sur la figure 1 que l'article 1 est répertorié au point de localisation référencé 3, ... l'article i est répertorié au point de localisation 6, ... l'article n est répertorié au point de localisation 18.

Une seconde mémoire 10 fait correspondre, pour chaque paire de points de localisation, des portions de trajet obligatoires. Ainsi, est-il illustré sur la figure 1 que, pour aller du point de locatisation 1 vers le point de localisation 2, la portion de trajet obligatoire est Δ1 ; pour aller du point de localisation 1 vers le point de localisation 3, la portion de trajet est Δ2 ; pour aller du point de localisation 1 vers le point de localisation 3, la portion de trajet est Δ3 ; ... pour aller du point de localisation 1 vers le point de localisation j, les portions de trajet sont Δh et Δh'. Il est à noter que l'introduction de portions de trajet obligatoires dans l'assistance à la navigation permet d'éviter la constitution de zones froides à l'intérieur du centre commerçant, c'est-à-dire de rayons (ou groupe de rayons) rarement ou jamais visités par les consommateurs.

Le grand magasin peut comporter plusieurs bornes d'informations d'orientation. Dans ce cas, tous les chemins ne partent pas du point de localisation référencé 1 (représentant, la localisation de la borne d'information située à l'entrée du grand magasin) mais peuvent partir d'autres points de localisation où se trouvent justement les autres bornes d'informations d'orientation (dans le cas de l'exemple de la figure 1, une autre borne est disposée au point de localisation 15 ; il est donc nécessaire de fournir des portions de trajet obligatoires au départ de ce point, qui sont Δi et Δi').

Une troisième mémoire 11 fait correspondre une ou plusieurs caractéristiques de profils avec au moins des portions de chemins personnalisés. Ainsi est-il illustré qu'à un profil intitulé "vêtements féminins" sont associés les portions de chemins personnalisés Δi(15->6) et Δk(18->4). Ces références traduisent qu'à un consommateur qui a pratiqué prieurs achats dans le domaine des vêtements féminins, par exemple, et qui requiert un chemin au départ de la borne de localisation 15 pour se diriger vers le point de localisation 6, il sera retourné la portion de chemin personnalisé Δi, Par contre, s'il est au départ du point de localisation 18 pour aller au point de localisation 4, il sera proposé la portion de chemin personnalisée Δk. Bien entendu, pour une même caractéristique de profil, il peut être attribuée une multitude de portions de chemins personnalisés, le nombre idéal de portions de chemins personnalisés étant le nombre de combinaisons possibles entre toutes les bornes de sélection et tous les articles en stock dans le grand magasin,

Enfin, une quatrième mémoire 12 fait correspondre des consommateurs identifiés par des donnés de profils. L'identification du consommateur peut avoir été faite de façon volontaire par le consommateur par, par exemple, l'insertion de la carte de fidélité 16 lors de sa requête d'orientation. Dans ce cas, la requête est accompagnée d'un champ identifiant le consommateur. De façon alternative, l'identification peut avoir été faite à l'insu du consommateur par détection de sa carte de fidélité équipée d'une puce pourvue d'une technologie RFID ou NFC par des capteurs associés non représentés (RFID ou NFC) équipant la borne 3. Quelles que soient les technologies utilisées (technologie de détection par contact telle que celle utilisant le lecteur 14, ou technologies de détection à champ proche telles que RFID ou NFC), un processeur 15 associé au capteur attribue à la requête immédiatement émise l'identifiant du consommateur détecté par le biais de sa carte de fidélité.

Le procédé selon un mode de réalisation de l'invention suit les étapes suivantes :
- il est mémorisé au sein du serveur 7 :
   une table de correspondance 10 entre des paires de points de localisation et des portions de trajet imposées, celles-ci pouvant être dynamiquement modifiées soit par un technicien soit en temps réel en fonction de zones froides (au sens du marchandisage) détectées dynamiquement par un système de surveillance adapté ;
   une table de correspondance 11 entre des caractéristiques de profil et une pluralité de portions de trajets ;
   une table de correspondance 12 entre des identifiants de consommateurs A, B, etc et leurs caractéristiques respectives de profil (vêtements, etc),
- le consommateur 2, situé à la borne de point de localisation 15, insère sa carte de fidélité 16 au sein du lecteur 14 et sélectionne la recherche d'un trajet optimisé pour l'article i.
- la requête d'orientation est transmise au serveur 7. La table de localisation 9 fournit la localisation de l'article i sélectionné. La table de correspondance 10 fournit pour le chemin 15 -> 6 deux portions de trajet obligatoires Δi et Δi'. L'identifiant du consommateur enseigne le système que ce consommateur a un profil "vêtements" grâce à la table de correspondance 12. Le croisement entre les portions de trajet obligatoires fournies par la table 10 et les portions de trajet personnalisés de la table 11 renvoie la portion de trajet Δi comme résultat commun. Bien entendu, les portions de trajet obligatoires et personnalisés peuvent se cumuler s'ils ne se contredisent pas. Par contre, il est essentiel d'intégrer au moins une portion de trajet obligatoire fournie par la table 10.
- le processeur 8 calcule alors un chemin entre 15 et 6 empruntant obligatoirement Δi, ainsi qu'illustré sur la figure 2, et renvoie le résultat à la borne qui l'affiche sur l'afficheur 50.

L'afficheur 5 peut également proposer, en même temps qu'un chemin optimisé, une liste d'articles correspondant au profil du consommateur. En plus, les articles proposés peuvent également compléter l'article sélectionné au départ. Ainsi, si le consommateur a requis la recherche du parcours pour un pantalon, le chemin qui lui proposé pourra passer par des étalages proposant des vêtements et accessoires assortis tels qu'une chemise, une veste et des chaussures assortis.

## Revendications

1. Procédé de fourniture d'informations d'orientation pour un consommateur (2) à la recherche d'un article (article î) dans un centre commerçant, comprenant :
- une étape de sélection par le consommateur d'au moins ledit article parmi une liste d'articles proposés par un terminal,
- une première étape de mémorisation pour mémoriser une table de correspondance entre des paires de points de localisation et des portions de trajet imposées,
- une étape de calcul d'au moins un trajet consistant en un chemin partant du point de localisation dudit terminal lors de la sélection vers le point de localisation de l'article sélectionné comprenant au moins une portion de trajet imposée correspondant à la paire de point de localisation {point de localisation dudit terminal lors de la sélection-point, de localisation de l'article sélectionné}.

2. Procédé selon la revendication 1, **caractérisé en ce que** les portions de trajet dans la table de correspondance entre des paires de points de localisation et des portions de trajet imposées, sont dynamiquement modifiées.

3. Procédé selon la revendication 1 ou 2, **caractérisé en ce qu'**il comporte une étape de récupération d'un identifiant dudit consommateur à la recherche dudit article, une seconde étape de mémorisation pour mémoriser une table de correspondance entre des identifiants de consommateurs et leurs caractéristiques respectives de profil, et une troisième étape de mémorisation pour mémoriser une table de correspondance entre des caractéristiques de profil et une pluralité de trajets associés, l'étape de calcul du trajet résultant étant destinée à sélectionner un trajet comprenant lesdites portions de trajet.

4. Procédé selon l'une des revendications 1 à 3, **caractérisé en ce que** le trajet résultant de l'étape de calcul est acheminé vers un écran (5) d'un dispositif (3) fixe de fourniture d'informations d'orientation.

5. Dispositif de fourniture d'informations d'orientation pour un consommateur (2) à la recherche d'un article (article i) dans un centre commerçant, comprenant :
- des moyens de sélection (3, 4, 5) par le consommateur d'au moins ledit article parmi une liste d'articles proposés à la vente au sein du centre commerçant,
- des premiers moyens de mémorisation (10) pour mémoriser une table de correspondance entre des paires de points de localisation et des portions de trajet imposées,
- des moyens de calcul (8) d'au moins un trajet résultant(ΔL, ΔL') consistant en un chemin partant du point de localisation (x15) dudit terminal lors de la sélection vers le point de localisation (x6) de l'article sélectionné comprenant une portion de trajet imposée correspondant à la paire de point de localisation {point de localisation dudit terminal lors de la sélection-point de localisation de l'article sélectionné}.

6. Dispositif selon la revendication précédente, **caractérisé en ce qu'**il comporte des moyens de récupération (14) d'un identifiant dudit consommateur à la recherche dudit article, des seconds moyens de mémorisation (12) pour mémoriser une table de correspondance entre des identifiants de consommateurs et leurs caractéristiques respectives de profil, et des troisièmes moyens de mémorisation (11) comportant une table de correspondance entre des caractéristiques de profil et une pluralité de trajets associés.

7. Dispositif selon la revendication 5 ou 6, **caractérisé en ce qu'**il est intégré à une borne fixe d'orientation.
